# EUROPÄISCHE PATENTSCHRIFT

(11) **EP 2 462 422 B1**
(45) Veröffentlichungstag und Bekanntmachung des Hinweises auf die Patenterteilung: **09.10.2013**
(21) Anmeldenummer: 10739472.8
(22) Anmeldetag: 17.06.2010
(51) Int. Cl.: G01N 3/04

(54) **VORRICHTUNG ZUR DURCHFÜHRUNG VON BAUTEIL- UND WERKSTOFFPRÜFUNGEN AN PROBEN**
DEVICE FOR PERFORMING COMPONENT AND MATERIAL TESTS ON SAMPLES
DISPOSITIF PERMETTANT DE RÉALISER DES CONTRÔLES D'ÉLÉMENTS CONSTITUTIFS OU DE MATÉRIAUX SUR DES ÉCHANTILLONS

(30) Priorität: 05.08.2009 DE 102009036247
(43) Veröffentlichungstag der Anmeldung: 13.06.2012
(73) Patentinhaber: Zwick GmbH&Co. Kg, 89079 Ulm (DE)
(72) Erfinder: KINDERMANN, Ulrich, 89155 Erbach (DE)
(74) Vertreter: Dziewior, Joachim
(86) Internationale Anmeldenummer: PCT/DE2010/000681
(87) Internationale Veröffentlichungsnummer: WO 2011/015171

(56) Entgegenhaltungen:
- EP-A1- 1 126 269
- DE-T2- 60 003 744
- JP-A- 5 149 851

## Beschreibung

Die Erfindung betrifft eine Vorrichtung zur Durchführung von Bauteil- und Werkstoffprüfungen an Proben, insbesondere von Druck- und Zugversuchen an Federn und elastischen Bauteilen, Baugruppen und Werkstoffproben, mit zwei sich gegenüberstehend angeordneten Probenaufnahmen, zwischen denen eine Kraft zur Belastung der dazwischen angeordneten Probe erzeugbar ist, wobei die eine Probenaufnahme fest an einem Grundrahmen und die andere Probenaufnahme an einem verfahrbaren Stellelement angeordnet ist, ferner mit einem den Verfahrweg der Probenaufnahme über einen Messtaster erfassenden Wegaufnehmer sowie einem die auf die Probe aufgebrachte Kraft erfassenden Kraftaufnehmer.

Derartige Vorrichtungen sind in unterschiedlichen Ausführungsformen aus der Praxis bekannt, bei denen jedoch je nach konstruktivem Aufbau Messfehler erster Ordnung nach Abbe zu beobachten sind, soweit die zu messende Strecke und das Messnormal nicht in einer Flucht liegen.

Weiter beschreibt die EP 1 126 269 eine Vorrichtung zur dynamischen mechanischen Analyse von Proben, wobei deren Materialeigenschaften über einen weiten Frequenzbereich ermittelt werden sollen. Um die hierbei üblicherweise auftretenden, die Messgenauigkeit beeinträchtigenden Vibrationen zu verringern, werden geeignete Massnahmen am Aufbau des Probenhalters, der Justiervorrichtung sowie eines Trägers vorgeschlagen.

Das aus der DE 600 03 744 T2 bekannte Gerät für Belastungs- und Dehnungsmessungen ist dahingehend ausgelegt, einen breiten Bereich von unterschiedlichen Tests durchführen zu können, ohne dass eine Anpassung an bestimmte, dem Test zu unterwerfende Produkte erforderlich ist.

Die JP 5 149851 beschreibt eine Testanordnung, bei welcher die Zug-/ Druckeigenschaften einer Probe durch Messung der axialen Verschiebung der Probe in einem derartigen Zustand ermittelt werden, dass die Last auf die Probe in axialer Richtung durch eine die axiale Verschiebung ermittelnde Meßanordnung bestimmt wird.

Weiter treten Kippfehler und elastische Verformungen dadurch auf, dass die Krafteinleitung üblicherweise außerhalb der Prüfachse erfolgt, wodurch ebenfalls die Messgenauigkeit beeinträchtigt wird.

Der Erfindung liegt die Aufgabe zugrunde, eine Vorrichtung der eingangs genannten Art dahingehend zu verbessern, dass Messfehler in Folge von Kippbewegungen durch Krafteinleitung außerhalb der Prüfachse weitgehend minimiert werden und darüber hinaus die Vorrichtung so aufgebaut ist, dass statt der Ermittlung einzelner Messpunkte ein durchgehendes Kraft-Weg-Diagramm aufgenommen werden kann.

Diese Aufgabe wird nach der Erfindung dadurch gelöst, dass das Stellelement ein hohl gebohrtes, den Wegtaster mit geringem Abstand umschließendes und mit der Probenaufnahme in Verbindung stehendes Krafteinleitungselement in Form einer Spindel, Zahnstange, eines Hydraulik- oder Pneumatikzylinders oder dergl. aufweist, über die die manuelle oder motorische Krafteinleitung koaxial oder zumindest nahezu koaxial zur Prüfachse erfolgt.

Der durch die Erfindung erreichte Vorteil besteht im wesentlichen darin, dass Kippmomente durch an dem Stellelement exzentrisch angreifende, der Verformung der Probe dienende Kräfte weitestgehend vermieden werden, so dass auch die hierdurch auftretenden Messfehler stark minimiert werden.

In bevorzugter Ausführungsform der Erfindung ist dazu weiter in konstruktiver Hinsicht vorgesehen, dass bei als Spindel ausgebildetem Krafteinleitungselement diese über eine Spindelmutter in dem Stellelement befestigt ist.

Weiter empfiehlt es sich im Rahmen der Erfindung, dass das Stellelement über eine spielfreie Führung am Grundrahmen angeschlossen ist. Hierdurch können eventuell noch entstehende Querkräfte von dieser zusätzlichen Führung aufgenommen werden.

Um die Krafteinleitung bei als Zahnstange ausgebildetem Krafteinleitungselement vorzunehmen, schlägt die Erfindung vor, dass die Zahnstange mit einer in axialer Richtung verlaufenden Verzahnung versehen ist, in die die Krafteinleitung mittels eines Ritzels erfolgt.

Hierbei empfiehlt es sich weiter, dass das Stellelement im Bereich der Verzahnung mit einer Ausparung zum Durchtritt des Ritzels versehen ist.

Nach einer ersten Ausführungsform der Erfindung ist die Verzahnung in die zylindrische Mantelfläche der Zahnstange eingebracht. Hierbei kann das Ritzel eine der Mantelfläche der Zahnstange angepasste Außenkontur aufweisen.

Nach einer zweiten, messtechnisch noch vorteilhafteren Ausgestaltung der Erfindung ist die Zahnstange zumindest im Bereich der Verzahnung mit einer axial sich erstreckenden Freischneidung versehen, durch die eine den Wegtaster nur halb umgreifende Halbschale gebildet wird, wobei beide Schnittflächen mit einer Verzahnung versehen sind und in jeder Verzahnung jeweils ein auf einer gemeinsamen Welle angeordnetes Ritzel greift. Auf diese Weise erfolgt die Krafteinleitung gleichmäßig beidseits der eigentlichen Messachse, wobei die Krafteinleitung selbst bei entsprechender Gestaltung der Spindel unmittelbar in der Ebene der Messachse erfolgen kann. Diese Ausführungsform führt daher zu keinem oder allenfalls minimalsten Kippfehlern.

Im Folgenden wird die Erfindung an in der Zeichnung dargestellten Ausführungsbeispielen näher erläutert; es zeigen:
- Fig. 1: den Gegenstand nach der Erfindung in einer Vorderansicht,
- Fig. 2: den Gegenstand nach Fig. 1 in Seitenansicht, teilweise im Schnitt dargestellt,
- Fig. 3: eine alternative Ausführungsform des Erfindungsgegenstandes in der Fig. 2 entsprechender Darstellung,
- Fig. 4: die Zahnstange der Vorrichtung nach den Fig. 1 und 2 in einer ersten Ausführungsform in Seiten-, Stirn- und Draufsicht sowie im Schnitt dargestellt,
- Fig. 5: die Zahnstange in einer alternativen Ausführungsform, dargestellt entsprechend Fig. 4.

Die in der Zeichnung dargestellte Vorrichtung dient zur Durchführung von Bauteil- und Werkstoffprüfungen an Proben 1, insbesondere von Druck- und Zugversuchen an Federn und elastischen Bauteilen, Baugruppen und Werkstoffproben.

Im Einzelnen besteht die Vorrichtung aus zwei sich gegenüber stehend angeordneten Probenaufnahmen 2.1, 2.2, zwischen denen eine Kraft zur Belastung der zwischen diesen Probenaufnahmen 2.1, 2.2 angeordneten Probe 1 erzeugbar ist.

Die untere der beiden Probenaufnahmen 2.1 ist fest an einem Grundrahmen 3 angeordnet, während die andere Probenaufnahme 2.2 an einem verfahrbaren Stellelement 4 angeordnet ist.

Um den Verfahrweg der oberen Probenaufnahme 2.2 erfassen zu können, ist ein Wegtaster 5 vorgesehen, der mit einem Wegaufnehmer 6 in Verbindung steht.

Ferner steht die obere Probenaufnahme 2.2 mit einem Kraftaufnehmer 7 in Verbindung, der die auf die Probe 1 aufgebrachte Kraft erfasst.

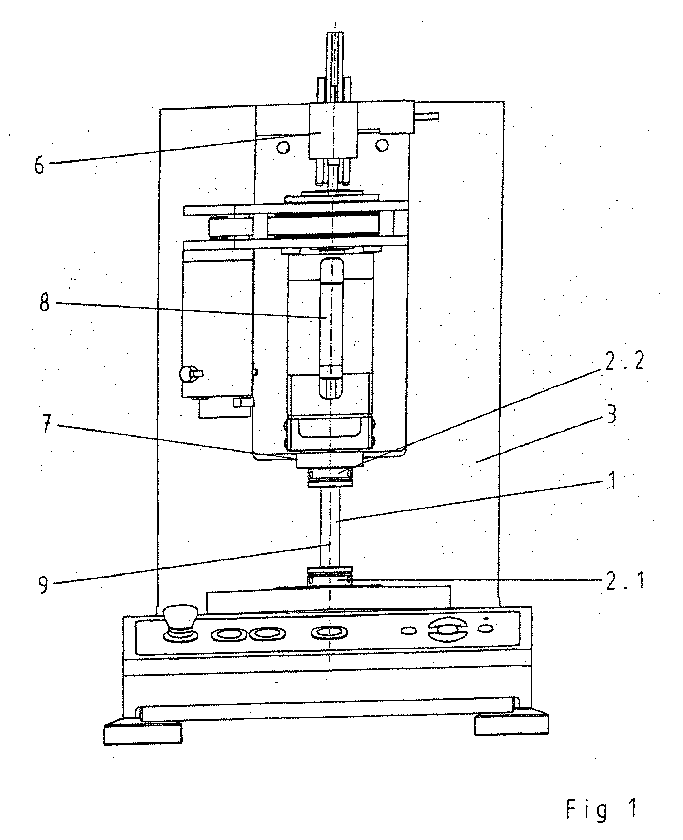

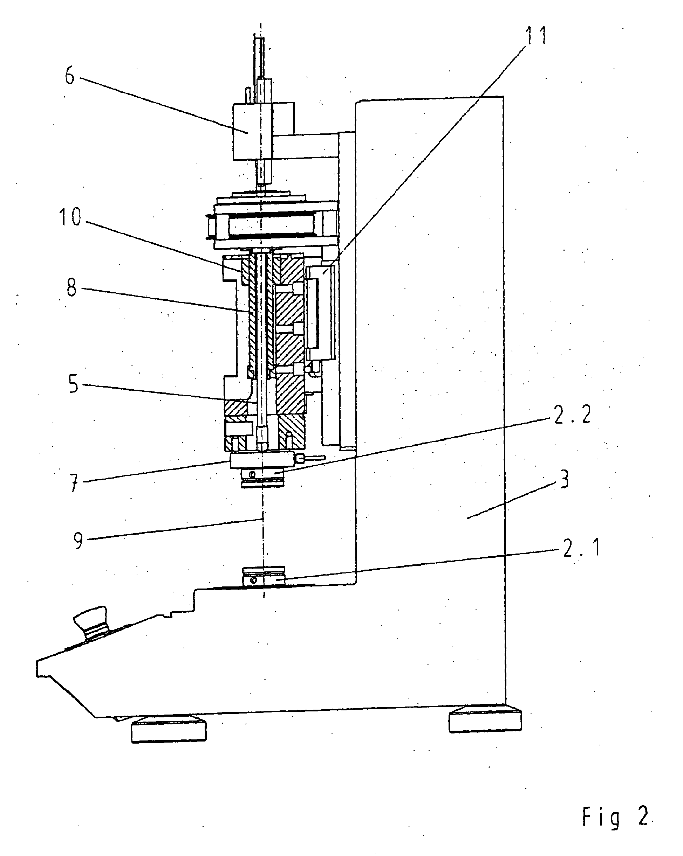

Das Stellelement 4 weist in dem Ausführungsbeispiel nach den Fig. 1 und 2 eine mit der Probenaufnahme 2.2 in Verbindung stehende, hohl gebohrte Spindel 8 auf, die den Wegtaster 5 mit geringem Abstand umschließt. Über diese Spindel 8 erfolgt die manuelle oder motorische Krafteinleitung, die hier auch in Folge des geringen Abstandes zur Messachse 9 koaxial erfolgt.

Die Spindel 8 selbst ist - wie sich aus der Fig. 2 ersehen lässt - über eine Spindelmutter 10 im Stellelement 4 befestigt und über einen Motor 15 über ein Getriebe 16 drehangetrieben. Weiter ist das Stellelement 4, wie ebenfalls die Figur 2 erkennen lässt, über eine spielfreie Führung 11 am Grundrahmen 3 angeschlossen.

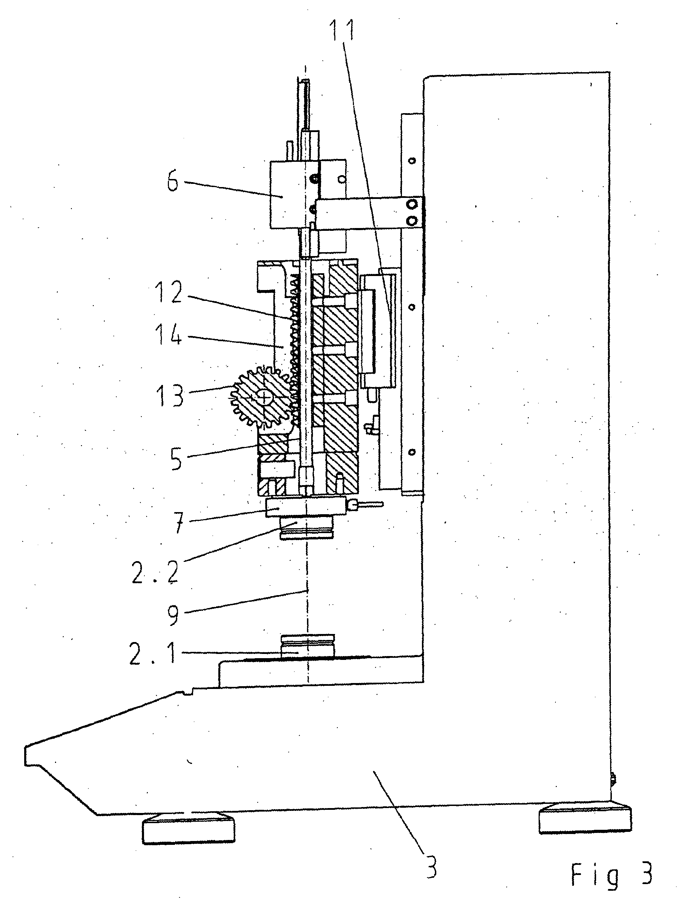

Wie die Figuren 3 bis 5 zeigen, kann statt der Spindel 8 auch eine mit einer in axialer Richtung verlaufenden Verzahnung 12 versehene Zahnstange zum Einsatz kommen. In diese Verzahnung 12 greift ein Ritzel 13 ein, über das die Krafteinleitung in die Zahnstange 8 erfolgt. Dies kann entweder - wie in der Zeichnung angedeutet - von Hand erfolgen oder auch elektromotorisch vorgenommen werden. Hierbei erfolgt die Krafteinleitung zwar etwas exzentrisch, aber dennoch immer noch nahezu koaxial.

Das Stellelement 4 ist im Bereich der Verzahnung, wie dies aus Fig. 3 zu ersehen ist, mit einer Aussparung 14 zum Durchtritt des Ritzels 13 versehen.

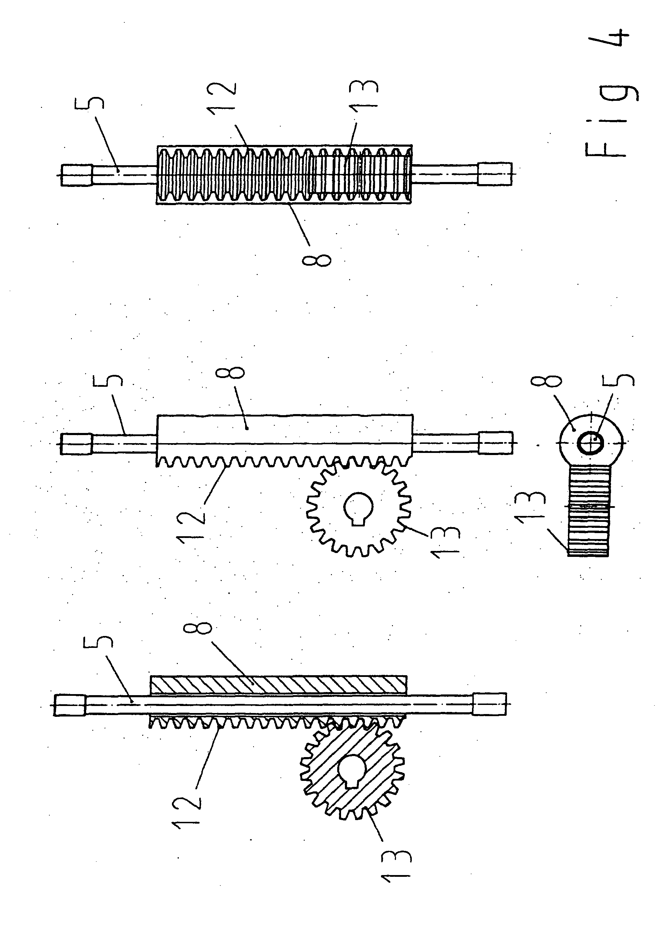

Gemäß Fig. 4 kann die Verzahnung 12 in die zylindrische Mantelfläche der Zahnstange 8 eingebracht sein, wobei das Ritzel 13 hierzu eine der Mantelfläche der Zahnstange 8 angepasste Formgestaltung aufweisen kann.

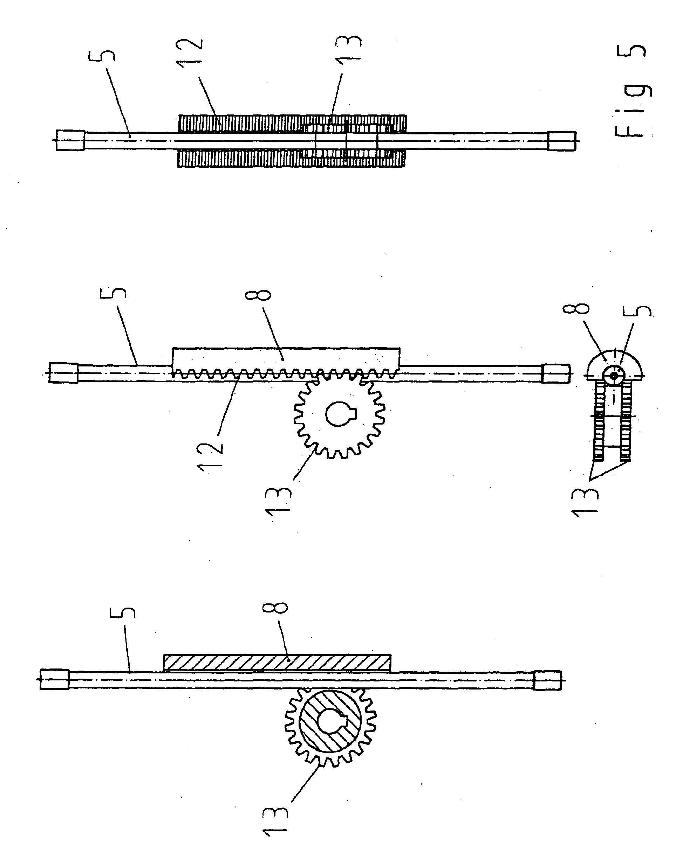

Bei der Ausführungsform gemäß Fig. 5 ist dagegen die Zahnstange 8 zumindest im Bereich der Verzahnung 12 mit einer axial sich erstreckenden Freischneidung versehen, wodurch die Zahnstange 8 eine den Wegtaster 5 nur halb umgreifende Halbschale bildet. Hier sind beide Schnittflächen der Zahnstange 8 mit einer Verzahnung 12 versehen, wobei die Schnittflächen etwa in der Ebene der Prüfachse liegen, so dass hier die Krafteinleitung zwar beidseits der Prüfachse, jedoch unmittelbar in deren Ebene erfolgt.

In jeder der beiden Verzahnungem greift jeweils ein auf einer gemeinsamen Welle angeordnetes Ritzel, wodurch die resultierende Kraft in die Prüfachse fällt. Ebenso ist es auch möglich, statt dessen ein Ritzel mit radialem Einstich einzusetzen.

## Patentansprüche

1. Vorrichtung zur Durchführung von Bauteil- und Werkstoffprüfungen an Proben, insbesondere von Druck- und Zugversuchen an Federn und elastischen Bauteilen, Baugruppen und Werkstoffproben, mit zwei sich gegenüberstehend angeordneten Probenaufnahmen (2.1, 2.2), zwischen denen eine Kraft zur Belastung der dazwischen angeordneten Probe (1) erzeugbar ist, wobei die eine Probenaufnahme (2.1) fest an einem Grundrahmen (3) und die andere Probenaufnahme (2.2) an einem verfahrbaren Stellelement (4) angeordnet ist, ferner mit einem den Verfahrweg der Probenaufnahme (2.2) über einen Wegtaster (5) erfassenden Wegaufnehmer (6) sowie einem die auf die Probe (1) aufgebrachte Kraft erfassenden Kraftaufnehmer (7), **dadurch gekennzeichnet, daß** das Stellelement (4) ein axial hohlgebohrtes, den Wegtaster (5) mit geringem Abstand umschließendes und mit der Probenaufnahme (2.2) in Verbindung stehendes Krafteinleitungselement (8) in Form einer Spindel, Zahnstange, eines Hydraulik- oder Pneumatikzylinders oder dergl. aufweist, über das die manuelle oder motorische Krafteinleitung koaxial oder zumindest nahezu koaxial zur Prüfachse (9) erfolgt.

2. Vorrichtung nach Anspruch 1, **dadurch gekennzeichnet, daß** bei als Spindel ausgebildetem Krafteinleitungselement (8) diese über eine Spindelmutter (10) in dem Stellelement (4) befestigt ist.

3. Vorrichtung nach Anspruch 1 oder 2, **dadurch gekennzeichnet, daß** das Stellelement (4) über eine spielfreie Führung (11) am Grundrahmen (3) angeschlossen ist.

4. Vorrichtung nach einem der Ansprüche 1 bis 3, **dadurch gekennzeichnet, daß** bei Ausbildung des Krafteinleitungselements (8) als Zahnstange mit einer in axialer Richtung verlaufenden Verzahnung (12) die Krafteinleitung mittels eines Ritzels (13) erfolgt.

5. Vorrichtung nach Anspruch 4, **dadurch gekennzeichnet, daß** das Stellelement (4) im Bereich der Verzahnung (12) mit einer Aussparung (14) zum Durchtritt des Ritzels (13) versehen ist.

6. Vorrichtung nach Anspruch 4 oder 5, **dadurch gekennzeichnet, daß** die Verzahnung (12) in die zylindrische Mantelfläche der Zahnstange (8) eingebracht ist.

7. Vorrichtung nach Anspruch 4 oder 5, **dadurch gekennzeichnet, daß** die Zahnstange (8) zumindest im Bereich der Verzahnung (12) mit einer axial sich erstreckenden Freischneidung versehen ist, durch die eine den Wegtaster (5) nur halb umgreifende Halbschale gebildet wird, wobei beide Schnittflächen mit einer Verzahnung (12) versehen sind und in jede Verzahnung (12) jeweils ein auf einer gemeinsamen Welle angeordnetes Ritzel (13) greift.

## Claims

1. An apparatus for conducting component and material tests on samples, in particular compression and tensile tests on springs and elastic components, assemblies, and material samples, comprising two spaced sample holders (2.1, 2.2) between which a force can be generated so as to apply a load to the sample therebetween, wherein the one sample holder (2.1) is fixed to a base frame (3), while the other sample holder (2.2) is on a movable positioner (4), furthermore comprising a motion detector (6) that uses a probe (5) to record the travel distance of the sample holder (2.2), and comprising a force sensor (7) that records the force applied to the sample (1), **characterized in that** the positioner (4) includes a tubular force application element (8) that surrounds the probe (5) with a small clearance and is connected to the sample holder (2.2), the force application element being in the form of a spindle, gear rack, hydraulic unit, or pneumatic cylinder, or the like, through which the manual or motorized application of force is effected coaxially or at least nearly coaxially relative to the test axis (9).

2. The apparatus according to claim 1, **characterized in that** in the case of a force application element (8) in the form of a spindle this spindle is attached by a spindle nut (10) to the positioner (4).

3. The apparatus according to claims 1 or 2, **characterized in that** the positioner (4) is connected to the base frame (3) through a backlash-free guide (11).

4. The apparatus according to one of claims 1 through 3, **characterized in that** the application of force is effected by a pinion (13) when the force application element (8) is a spindle having an axially extending rack (12).

5. The apparatus according to claim 4, **characterized in that** the positioner (4) is formed with a cut-out (14) in the region of the rack (12) through the pinion (13) engages.

6. The apparatus according to claims 4 or 5, **characterized in that** the rack (12) is formed in the cylindrical outer surface of the spindle (8).

7. The apparatus according to claims 4 or 5, **characterized in that** the spindle (8) is provided with an axially extending cut-out at least in the region of the rack (12), thereby creating a tubular semicylinder that only half surrounds the probe (5), wherein both edges are provided with a rack (12), and one pinion (13) each on a common shaft engages each rack (12).

## Revendications

1. Dispositif permettant de réaliser des contrôles d'éléments constitutifs et de matériaux sur des échantillons, en particulier des essais de compression et de traction sur des ressorts et des éléments constitutifs, des modules et des échantillons de matériaux élastiques, avec deux logements d'échantillon (2.1, 2.2) disposés l'un en face de l'autre, entre lesquels il est possible de produire une force pour la mise en charge de l'échantillon (1) disposé entre eux, dans lequel un premier logement d'échantillon (2.1) est fixé sur un bâti de base (3) et l'autre logement d'échantillon (2.2) est disposé sur un élément de réglage déplaçable (4), avec en outre un enregistreur de course (6) détectant le chemin parcouru par le logement d'échantillon (2.2) au moyen d'un palpeur de course (5), ainsi qu'avec un enregistreur de force (7) détectant la force appliquée à l'échantillon (1), **caractérisé en ce que** l'élément de réglage (4) présente un élément d'introduction de force (8) percé axialement, entourant le palpeur de course (5) à faible distance et se trouvant en liaison avec le logement d'échantillon (2.2), qui est réalisé sous la forme d'une broche, d'une crémaillère, d'un cylindre hydraulique ou pneumatique ou analogue, par lequel l'introduction manuelle ou motorisée de force est effectuée coaxialement ou au moins à peu près coaxialement à l'axe d'essai (9).

2. Dispositif selon la revendication 1, **caractérisé en ce que**, dans le cas d'un élément d'introduction de force (8) réalisé sous la forme d'une broche, celle-ci est fixée dans l'élément de réglage (4) au moyen d'un écrou de broche (10).

3. Dispositif selon la revendication 1 ou 2, **caractérisé en ce que** l'élément de réglage (4) est relié au bâti de base (3) au moyen d'une glissière sans jeu (11).

4. Dispositif selon l'une quelconque des revendications 1 à 3, **caractérisé en ce que**, dans le cas où l'élément d'introduction de force (8) est réalisé sous la forme d'une crémaillère avec une denture (12) s'étendant en direction axiale, l'introduction de force est effectuée au moyen d'un pignon (13).

5. Dispositif selon la revendication 4, **caractérisé en ce que** l'élément de réglage (4) est muni, dans la région de la denture (12), d'une découpe (14) pour le passage du pignon (13).

6. Dispositif selon la revendication 4 ou 5, **caractérisé en ce que** la denture (12) est taillée dans la surface latérale cylindrique de la crémaillère (8).

7. Dispositif selon la revendication 4 ou 5, **caractérisé en ce que** la crémaillère (8) est munie, au moins dans la région de la denture (12), d'une découpe libre s'étendant axialement, par laquelle une demi-coquille n'entourant qu'à moitié le palpeur de course (5) est formée, dans lequel les deux faces de coupe sont munies d'une denture (12) et un pignon (13) monté sur un arbre commun engrène respectivement avec chaque denture (12).
